# EUROPÄISCHE PATENTSCHRIFT

(11) **EP 2 707 152 B1**
(45) Veröffentlichungstag und Bekanntmachung des Hinweises auf die Patenterteilung: **23.03.2016**
(21) Anmeldenummer: 12721798.2
(22) Anmeldetag: 09.05.2012
(51) Int. Cl.: B05D 3/06, B05D 3/14, B05D 7/04, B29C 45/14, B44C 1/17, C08J 7/12, B05D 1/32, B05D 3/04

(54) **TRÄGERFUNKTIONSSCHICHTANORDNUNG**
SUBSTRATE-FUNCTIONAL LAYER ASSEMBLY
ENSEMBLE SUPPORT-COUCHE FONCTIONNELLE

(30) Priorität: 09.05.2011 DE 102011075536
(43) Veröffentlichungstag der Anmeldung: 19.03.2014
(73) Patentinhaber: Fraunhofer-Gesellschaft zur Förderung der angewandten Forschung e.V., 80686 München (DE)
(72) Erfinder: VISSING, Klaus-Dieter, 27321 Thedinghausen (Morsum) (DE); DÖLLE, Christopher, 27749 Delmenhorst (DE); KLATT, Yvonne, 28307 Bremen (DE)
(74) Vertreter: Eisenführ Speiser
(86) Internationale Anmeldenummer: PCT/EP2012/058509
(87) Internationale Veröffentlichungsnummer: WO 2012/152814

(56) Entgegenhaltungen:
- EP-A2- 1 815 915
- WO-A1-2004/101662
- DE-A1- 10 308 989
- US-A1- 2004 003 742
- US-B1- 6 217 965

## Beschreibung

Die Anmeldung betrifft eine Trägerfunktionsschichtanordnung umfassend einen Träger aus polymerem Material und eine unmittelbar auf dem Träger angeordneten Funktionsschicht, wobei die zur Trennung des Trägers von der Funktionsschicht zu überwindende Schälkraft (Ablösekraft) mittels eines Aktivierungsverfahrens eingestellt wurde. Die Anmeldung betrifft ferner ein Verfahren zum Herstellen einer solchen Trägerfunktionsschichtanordnung, die Verwendung einer solchen Trägerfunktionsschichtanordnung in einem Spritzgussverfahren sowie ein Verfahren zur Herstellung eines Bauteiles mit einer Funktionsschicht unter Verwendung der erfindungsgemäßen Träger-Funktionsschichtanordnung.

Es besteht ein hoher Bedarf an Funktionsbeschichtungen, wie z. B. UV-Schutzschichten, Dekor tragenden Schichten oder Kratz- und Abrasionsschutzschichten um Oberflächen dauerhaft gebrauchsfertig zu machen und/oder optisch ansprechend zu gestalten. Naheliegende Einsatzfelder sind transparente Kunststoffe wie z.B. PC oder PMMA, die für Verglasungszwecke, Sensorzwecke, optische Elemente etc. eingesetzt werden oder aber für hochglänzende Kunststoffe, z.B. in Klavierlackoptik. Weiterer Bedarf ist im Sektor der folienverarbeitenden Industrie erkennbar. Hierzu gehören sowohl Hersteller von Handys o.ä. als auch Verarbeiter, die Folien über Laminierprozesse verarbeiten. Darüber hinaus sind auch viele Lackierungen oder Kunststoffoberflächen nicht sonderlich kratzfest, so dass auch in diesem Bereich eine Notwendigkeit besteht solche Oberflächen zu schützen.

Produkte aus Kunststoff werden vielfach über Spritzgussverfahren hergestellt. Nach der Entnahme der Bauteile aus dem Formwerkzeug sind diese elektrostatisch aufgeladen und ziehen Staub aus der Umgebung an, so dass sie üblicherweise in Reinräumen zu verarbeiten sind, wenn sie optischen Anforderungen genügen müssen. Ferner sind sie weich und können bis zum nächsten Veredelungsschritt mechanisch geschädigt werden. Darüber hinaus sind nachfolgende Veredelungsschritte, sei es z.B. ein Lackier- oder ein Plasmabeschichtungsverfahren in der Regel eine Aktivierung der Oberfläche angewiesen, um eine optimale Haftung zu gewährleisten.

Eine Verbesserung dieser Situation wird durch InMould Techniken erreicht. Die InMould Techniken beschreiben Verfahren, bei dem eine Funktionsschicht im Spritzgussprozess hinterspritzt wird und instantan Haftung zum Spritzgussbauteil aufbaut. Die InMould Techniken sind wirtschaftlich interessant, da sie zwei Fertigungsschritte vereinen: die Formgebung und die Veredlung. Allerdings werden bei diesen Verfahren keine Funktionsschichten z.B. im Sinne eines hochwertigen flexiblen Kratzschutzes (wie z. B. die mittels Plasmaverfahren erstellten in der Anmeldung mit dem deutschen Aktenzeichen DE 10 2009 000 699.0 offenbarten Schichten) übertragen.

Mit dem InMould PlasmaCoating wird nun eine Möglichkeit geboten, Funktionsschichten, insbesondere plasmapolymere Funktionsschichten auf temporär unterstützenden polymeren Trägern (z.B. Folien) abzuscheiden und diese durch einen InMould Prozess auf ein Spritzgussbauteil zu transferieren. Die Haftung zum polymeren Träger ist derart einzustellen, dass der Verbund Träger/Funktionsschicht einerseits stabil und für die weiteren Handhabungsschritte handelbar ist, der Träger andererseits aber zu einem späteren Zeitpunkt zuverlässig von der Funktionsschicht getrennt werden kann. Lösungen aus dem Stand der Technik (z.B. DE 10200804709 oder DE 102009011826) waren nicht zielführend, da keine ausreichenden Adhäsionskräfte zur Verfügung gestellt werden können und eine Modifikation der Trennfolie durch den nachfolgenden Funktionsschichtauftrag zwingend zu vermeiden ist.

Von besonderem Interesse sind Kratz- und Abrasionsschutzschutzschichten, insbesondere plasmapolymere Kratzschutzschichten. Kratzschutzschichten weisen jedoch wie viele hoch vernetzte Beschichtungen hohe Eigenspannungen auf, die den Haftungskräften zum Träger entgegenwirken. Es ist somit notwendig, die Haftung der Kratzschutzschicht genau auf die Eigenspannungseigenschaften (unabhängig ob Zug- oder Druckeigenspannungen auftreten) und dem jeweiligen polymeren Träger einzustellen. Bei zu geringer Haftung zum Träger bewirken die Eigenspannungen ein (lokales) Ablösen und eine (lokale) Beschädigung der Kratzschutzschicht (z.B. das Entstehen eines Rissnetzwerkes), bei zu hoher Haftung ist gewünschte Ablösbarkeit z. B. nach einem Hinterspritzen nicht gewährleistet. Selbst für Beschichtungen mit unterschiedlicher Eigenspannung sind unterschiedliche Haftungskräfte einzustellen.

Insofern besteht der Bedarf eine einfache und preiswerte Möglichkeit zu schaffen, die Haftung der Funktionsschicht auf dem Träger einzustellen. Diese sollte bevorzugt auch für die Bahnwarenbearbeitung geeignet sein und unabhängig vom Funktionsschichtauftrag sein.

Auf der Basis des erfindungsgemäßen Vorgangs wird ein Verbund bereitgestellt, welcher für das Hinterspritzen geeignet ist (InMould-Verfahren). Insofern sind alle InMould-Verfahren zum Stand der Technik zuzuzählen, insbesondere deren Realisation für eine temporäre Haftung der zu übertragenen Schichten auf dem Trägermaterial bzw. die Einstellung der Haftungskräfte auf dem Trägermaterial. Beispiele hierzu:
InMould Labeling (IML)

Beim InMould Labeling wird die Formteiloberfläche im Spritzgießwerkzeug mit bedruckten und der Kontur entsprechend ausgestanzten Etikettenfolien versehen. Die fertigen Folien werden mit einem Handlingsystem in das Spritzgusswerkzeug eingebracht und dort fixiert. Anschließend wird die Schmelze eingespritzt und die bedruckte Folie verbindet sich unlösbar mit dem Träger. Das IML-Verfahren verfügt über keine trennende Zwischenschicht, insofern verbleibt die Folie auf dem Spritzgussbauteil und wird Bestandteil der Veredelungsschicht.

Thermoplastische Folien werden mit einem Thermoplasten hinterspritzt. Der Prozess wird so eingestellt, dass die thermoplastische Folie erweicht und sich mit der hinterspritzten Masse verbinden kann.

### InMould Decoration (IMD)

Beim Prinzip des IMD werden im Spritzgießwerkzeug Farb- und Lackschichten auf das Bauteil übertragen, nicht die gesamte Folie. Das Motiv befindet sich als Negativdruck auf der der Werkzeugwand abgewandten Seite der Trägerfolie. Unter dem Einfluss der heißen Schmelze lösen sich die Lackschichten von der Trägerfolie und verbinden sich fest mit dem Träger. Die IMD-Folie besteht aus den im Folgenden genannten Schichten. Auf das Trägerband wird eine zusätzliche Trennschicht aufgebracht. Darauf befindet sich ein Schutzlack, der die eigentliche Farb- oder (bei Metalleffekten) Metallschicht trägt. Zur besseren Haftung wird noch eine Klebeschicht aufgetragen. Durch Hinterspritzen wird das Motiv auf das Spritzgussteil übertragen, die Trennschicht ermöglicht das abschließende Ablösen der Trägerfolie.

Es werden additive Trennschichten, Ablöseschichten oder Übertragungslagen verwendet. Diese können im Detail unterschiedlich ausgeführt sein, z.B. über trennende Zusätze, Lacke, die Dekorfarbe selbst (Trennung durch Kohäsionsbruch im Lack), wasserlöslicher Harz (d.h. der Träger wird abschließend durch Wassereinwirkung entfernt), schwache Vernetzung oder auch nur über eine schlechte Haftung zum Substrat. Solche Verfahren werden z. B. in der US2010291329A oder WO09077400A oder US6217965B1 beschrieben.

### Transferbeschichtungen

In der Anmeldung mit dem deutschen Amtsaktenzeichen 10 2007 040 655.1 wird beschrieben wie eine plasmapolymere Trennschicht erzeugt wird, welche das gezielte Ablösen ermöglicht. Bei dieser Ausführung wird das Ablösen von einem Träger über einen grenzflächennahen Kohäsionsbruch in der plasmapolymeren Trennschicht ermöglicht. Diese Beschichtung ist grundsätzlich für die oben genannten Anwendungen nutzbar, doch hat sie den Nachteil, dass sie über ein mehrstufiges, aufwändiges Verfahren herzustellen ist. Dies ist für Bahnware im Rolle zu Rolle Prozess nur mit sehr hohem Aufwand realisierbar.

Gemein ist fast allen Verfahren nach dem Stand der Technik, dass das abschließende Ablösen des Trägers durch eine gesondert aufgebrachte Beschichtung gewährleistet wird. Der Träger wird somit immer mit einem auftragenden Verfahren vorbeschichtet. Dies birgt zusätzlichen Aufwand in sich. Weiterhin bietet dieses Vorgehen wenig Möglichkeit flexibel auf Änderungen, z.B. Wechsel des Trägermaterials, Funktionsschichtdicke und damit die Eigenspannungen, zu reagieren. Weiterhin reduziert ist z.B. für einen Plasmabeschichter die Möglichkeit die Haftung nach Bedarf vor der jeweiligen Funktionsbeschichtung geeignet einzustellen.

Alternativ werden unbehandelte Folien (z.B. PET) benutzt. Dies ist dann möglich, wenn das zu übertragende Material beim Spritzgussverfahren aufgrund der Erweichungstemperatur aufschmilzt, die temperaturbeständigere Trägerfolie jedoch nicht. Dies ist eingeschränkt auf Thermoplastübertragung und daher für nicht thermoplastische und nicht thermisch reaktive Stoffe, wie eine plasmapolymere Kratzschutzschicht, nicht anwendbar. Auch sind nur ganz bestimmte Materialkombinationen möglich.

Die DE 10 2009 011 826 A1 offenbart die Übertragung von Farbschichten in einem Trägermaterial auf ein Spritzgussteil. Sie erwähnt zwar grundsätzlich die Möglichkeit, eine Oberflächenbehandlung des Trägermaterials durchzuführen, diese Oberflächenbehandlung dient allerdings nur zur Einstellung der spezifischen Oberflächenenergie, um die Farbe sicher aufbringen zu können. Die konkrete Einstellung der Haftkräfte ist nicht näher beschrieben.

Aufgabe der vorliegenden Erfindung war es vor dem Hintergrund des Standes der Technik ein möglichst breit einsetzbares Verfahren anzugeben, mittels dessen die Schälkraft zur Trennung zwischen einem (polymeren) Trägermaterial und einer auf dem Träger aufgebrachten Funktionsschicht eingestellt werden kann, ohne dass zusätzliche gezielt die Schälkraft beeinflussende Schichten zwischen Funktionsschicht und Träger eingesetzt werden müssen. Aufgabe der Erfindung war es auch eine durch ein solches Verfahren hergestellte Trägerfunktionsschichtanordnung anzugeben.

Die Aufgabe hinsichtlich des letzteren Gesichtspunktes wird gelöst durch eine Trägerfunktionsschichtanordnung, umfassend einen Träger aus polymerem Material und eine unmittelbar auf dem Träger angeordnete Funktionsschicht, wobei die zur Funktionsschicht ausgerichtete Seite des Trägers einem Aktivierungsverfahren unterworfen wurde, das gleichzeitig eine Strukturschwächung des Trägers an dieser Seite bewirkt, wobei das Aktivierungsverfahren so durchgeführt wurde, dass (i) die Ebene mit der geringsten Festigkeit (Sollbruchfläche) innerhalb der Träger-Funktionsschichtanordnung innerhalb des Trägermaterials liegt und (ii) die bei Trennung der Funktionsschicht vom Träger zu überwindende Schälkraft 0,1 - 10 N/cm, bevorzugt 0,4 - 5 N/cm beträgt.

Funktionsschichten im Sinne dieser Erfindung sind Schichten, die einer Oberfläche gezielt verbesserte Eigenschaften vermitteln sollen. Hierbei kann es sich um Schutzfunktionen wie z. B. Kratzschutz, UV-Schutz oder auch dekorative Funktionen handeln. Ausdrücklich keine Funktionsschichten im Sinne dieser Anmeldung sind Schichten, deren Hauptfunktion ist, eine Sollbruchstelle in die Träger-Funktionsschichtanordnung einzuführen (Trenn- oder Ablöseschichten).

Bevorzugte Funktionen der Funktionsschichten sind weiter unten beschrieben. Im Sinne der Erfindung können Funktionsschichten auch Farb- und/oder Lackschichten sein, es ist aber für einige Fälle im Sinne der Erfindung bevorzugt, dass Funktionsschichten keine Lack- oder Farbschichten sind, insbesondere nicht solche zu hauptsächlich dekorativen Zwecken.

Für viele Bereiche kann es bevorzugt sein, dass die Funktionsschicht einen Wasserrandwinkel von ≥ 95°, weiter ≥ 90° und besonders bevorzugt ≥ 80° hat gemessen mit einem Kontaktwinkelmessgerät.

Der Träger im Sinne dieser Erfindung ist ein Material, das nach Aufbringung der Funktionsschicht auf ihren eigentlichen Bestimmungort wieder entfernt werden soll. Daher ist es wichtig, die Haftkräfte (die Festigkeit) innerhalb der Träger-Funktionsschichtanordnung, bzw. die Ablösekräfte, die zum späteren Trennen zum Beispiel zur Schälen (Schälkräfte) notwendig sind und insbesondere die Sollbruchlinie zwischen Träger- und Funktionsschicht möglichst genau zu kontrollieren.

Überraschenderweise hat sich herausgestellt, dass diese Aufgabe mit Hilfe gezielter Prozessführung bei typischen Aktivierungsverfahren hervorragend gelöst werden kann.

Unter einem Aktivierungsverfahren im Sinne dieser Erfindung sind typische Verfahren zu verstehen, die eingesetzt werden, die Haftkraft einer Polymeroberfläche gegenüber einer Beschichtung zu erhöhen. Im Sinne dieser Erfindung sind als Aktivierungsfahren nur solche Verfahren zu verstehen, die keine Schichtbildung bewirken. Das heißt, die erfindungsgemäß einzusetzenden Aktivierungsverfahren führen zu keiner geschlossen abgeschiedenen Beschichtung. Der Einbau bestimmter Funktionen, wie z. B. zusätzlicher Sauerstofffunktionen in die zu aktivierende Oberfläche ist dabei nicht ausgeschlossen, in vielen Fällen sogar bevorzugt. Er ist aber keine zwingende Voraussetzung.

### Vorgang Aktivierung

Die Oberfläche eines Polymers verhält sich ohne weitere Maßnahmen weitgehend inert (passiv) gegenüber seiner Umgebung. Mit Hilfe einer Oberflächenaktivierung werden funktionelle, polare Gruppen in die Oberfläche des Polymers eingebaut. Hierdurch werden die Benetzbarkeit der Oberfläche verbessert und die Adhäsionskräfte über erhöhte physikalische und chemische Wechselwirkungen zwischen Oberfläche und Klebstoff, Haftvermittler oder Lack gesteigert. Durch die Aktivierung wird die polymere Netzwerkstruktur zunächst auf Molekülebene fragmentiert, wodurch reaktive Anker (z.B. Radikale) entstehen. An diese Anker können Sauerstoffverbindungen aus dem umgebenden Prozessgas anbinden und werden integraler Bestandteil der Polymeroberfläche.

Der Übergang zwischen einem passiven Verhalten und dem Erreichen einer optimalen Aktivierung ist fließend. Entsprechend nimmt beispielsweise die Oberflächenenergie als Maß für die Haftungsvoraussetzungen zunächst sukzessive mit höherer Aktivierungsintensität zu. Die Oberflächenenergie kann mit Hilfe bekannter Verfahren, z.B. Testtinten, Kontaktwinkelmessgerät oder ähnlichem bestimmt werden. Ähnliches gilt für den Wasserrandwinkel, der zunächst hoch ist und mit der Aktivierungsintensität abnimmt. Insofern lässt sich ein Bereich unterscheiden, in denen die erreichte Aktivierung noch zu gering ist (Unteraktivierung) um den Anforderungen z.B. an eine Klebung zu genügen.

Eine zu hohe Aktivierungsintensität (Überaktivierung) kann sich jedoch auch gegenteilig auswirken. Eine Folge kann sein, dass das Polymernetzwerk durch die Aktivierung geschwächt oder derart stark fragmentiert wird, dass einzelne Bestandteile aus dem Netzwerkverbund komplett herausgerissen werden oder nur noch eine sehr geringe Haftung zum Polymerbulk (Molekülfragmentlage) aufweisen. Häufig ist von Molekülschrott die Rede, der ohne Anbindung auf der Oberfläche liegt.

Die Überaktivierung wird nicht durch eine alleinige Messung der Oberflächenenergie oder des Wasserrandwinkel angezeigt, da grundsätzlich auch die Molekülfragmentlage hochenergetisch ist. Eine anschließende Beschichtung kann optimal an die Molekülfragmentlage anbinden, diese wiederum besitzt selbst nur geringe Anbindung an die polymere Bulkstruktur des überaktivierten Polymers, so dass ein oberflächennaher kohäsiver Bruch im Polymer die Folge ist.

Eine im Sinne dieser Erfindung vorzunehmende Überaktivierung kann unter Umständen auch schon dadurch entstehen, dass die Abscheidung der Funktionsschicht unter Bedienung erfolgt, die eine gleichzeitige entsprechende Aktivierung der Polymers (des Trägers, insbesondere bei PET) bewirken. Bevorzugt ist die Aktivierung aber ein eigener Prozessschritt, ohne dass eine Schichtabscheidung stattfindet.

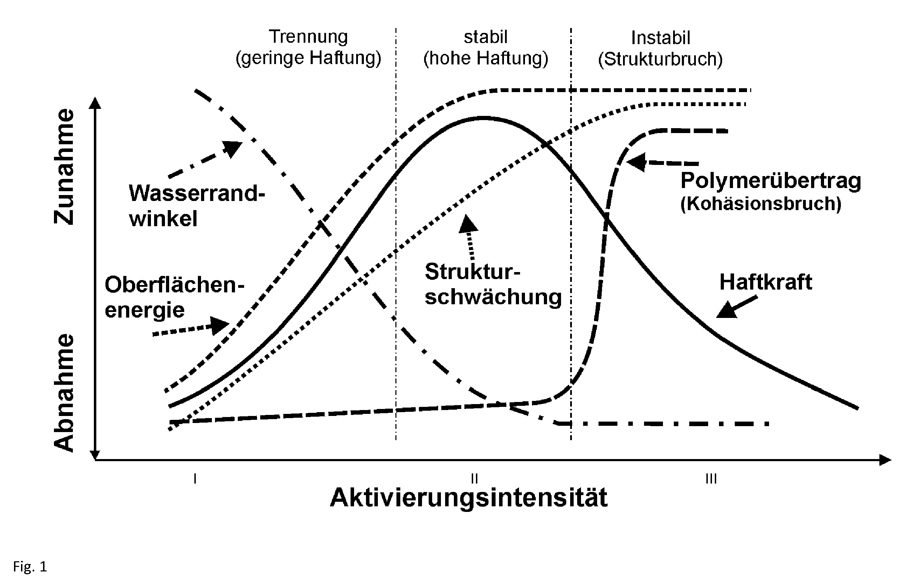

Fig. 1 zeigt den Zusammenhang zwischen der Aktivierungsintensität und dem Wasserrandwinkel, der Oberflächenenergie, der Haftung, der Strukturschwächung und dem Polymerübertrag (aufgrund eines oberflächennahen, kohäsiven Strukturversagens des Polymers).

Im Stand der Technik werden Aktivierungsverfahren vor allem eingesetzt um eine möglichst hohe Haftung einer Beschichtung auf dem zu beschichtenden (aktivierten) Substrat zu gewährleisten. Dies bedeutet, dass die Aktivierung regelmäßig so durchgeführt wird, dass die Aktivierungsintensität im Bereich II innerhalb der Fig. 1 eingesetzt wird. Der Ansatz der vorliegenden Erfindung geht dabei einen überraschend anderen Weg: Es soll eine Aktivierungsintensität eingesetzt werden, die in den Bereich III innerhalb der Fig. 1 hineinfällt. Hier ist es überraschenderweise möglich, bei einer ausreichenden Haftung innerhalb der Träger-Funktionsschicht-Anordnung gute, einstellbare Trenneigenschaften (Strukturschwächung im Polymer) für die Ablösung der Funktionsschicht vom Träger zu erreichen. Damit wird der ursprüngliche Ansatz der Aktivierung einer Oberfläche hinsichtlich der Stabilität der oberflächennahen Bereiche des Trägers in einer überraschend effektiven Weise ausgenutzt.

Die erfindungsgemäße Träger-Funktionsschicht-Anordnung zeichnet sich dadurch aus, dass die entstehenden Haftkräfte zweierlei Bedingungen genügen:
- Der Verbund zwischen Funktionsschicht und Träger ist so stabil, dass die Beschichtung nicht beschädigt wird oder sich durch interne Kräfte, z.B. Eigenspannungen, selbstständig löst.
- Die Funktionsschicht lässt sich z. B. nach Hinterspritzen problemlos und sauber vom Träger trennen.

Um diesen Anforderungen zu genügen, ist es notwendig einerseits die Haftungsbedingungen für die Funktionsschicht auf dem polymeren Träger zu erhöhen, andererseits dürfen die Haftkräfte nicht zu hoch sein, um eine anschließende Trennung zu gewährleisten.

Durch die Aktivierung werden oberflächlich durch den Einbau funktioneller Gruppen und/oder die Bereitstellung funktioneller Gruppen durch Bindungsbrüche innerhalb des Polymers haftungsfördernde Eigenschaften eingestellt, jedoch die polymere Struktur derart geschwächt, dass ein Kohäsionsbruch im Träger eine spätere Trennung ermöglicht. Der Fachmann ist auf Basis dieses Textes in der Lage, die Aktivierungsparameter derart zu variieren, dass eine anschließende Testung nach Auftrag z.B. eines Klebstoffes oder einer Schmelze den geeigneten Bereich der Überaktivierung identifiziert (siehe auch weiter unten).

Eine geeignete Strukturschwächung kann auch durch Bestrahlung mit Licht oder durch Beschuss mit Ionen oder Elektronen stattfinden. Energiereiches Licht ist in der Lage, Molekülbindungen innerhalb des polymeren Netzwerkes zu brechen. Aufgrund der starken Absorption von UV- und VUV-Licht innerhalb eines Polymers ist die Strukturschwächung als Folge oft oberflächennah (je nach Material wenige nm bis zu einigen µm). Die Strukturschwächung kann auch innerhalb eines Aktivierungsprozesses ablaufen, bei dem geeignete Strahlung entsteht, zum Beispiel innerhalb eines Plasmaaktivierungsprozesses. Die Strukturschwächung kann forciert werden, indem der Fachmann geeignete Gaskombinationen für die Aktivierung einsetzt: Dem Fachmann sind die spektralen Emissionsspektren bekannt, so dass er die Plasmastrahlung gezielt einstellen kann. Beispielsweise besitzen Wasserstoffplasmen einen vergleichsweise hohen Anteil an VUV-Emissionsanteilen. Weiterhin kann die Strukturschwächung durch gezielten Ionenbeschuss zusätzlich forciert werden. Dem Fachmann sind Möglichkeiten bekannt, den lonenbeschuss zu erhöhen, zum Beispiel indem der polymere Träger in die Nähe einer Elektrode mit Vorspannung (BIAS) positioniert wird oder durch separate lonenquellen. Die Verwendung eines BIAS-gesteuerten Prozesses erlaubt zudem, die Plasmaintensität und somit die Strahlungsintensität in der Nähe des polymeren Träger lokal zu erhöhen, um zum Beispiel den Prozess zeitlich zu beschleunigen.

Bei der Einstellung der Strukturschwächung (und damit der zur Trennung erforderlichen Schälkraft) müssen oft vorhandene interne Eigenspannung innerhalb der Funktionsschicht berücksichtigt werden. Wird die Strukturschwächung zu hoch und somit die späteren Schälkräfte zu gering gewählt, so kommt es zu lokalen oder großflächigen Ablösungen der Funktionsschicht. Das Ablösen kann auch zeitverzögert stattfinden, so dass der Fachmann auch die Langzeitstabilität zu beachten hat. Als weiteres Fehlerbild kann auftreten, dass durch die Eigenspannungen verursacht der erfindungsgemäße Träger/Funktionsschicht- Verbund nicht mehr handhabbar ist, z.B. durch selbständiges zu starkes Aufrollen des Verbundes. Diesem Fehlerbild kann entgegengewirkt werden, indem der polymere Träger nach Steifigkeit ausgewählt wird, beispielsweise durch die Materialwahl oder durch die Trägerdicke.

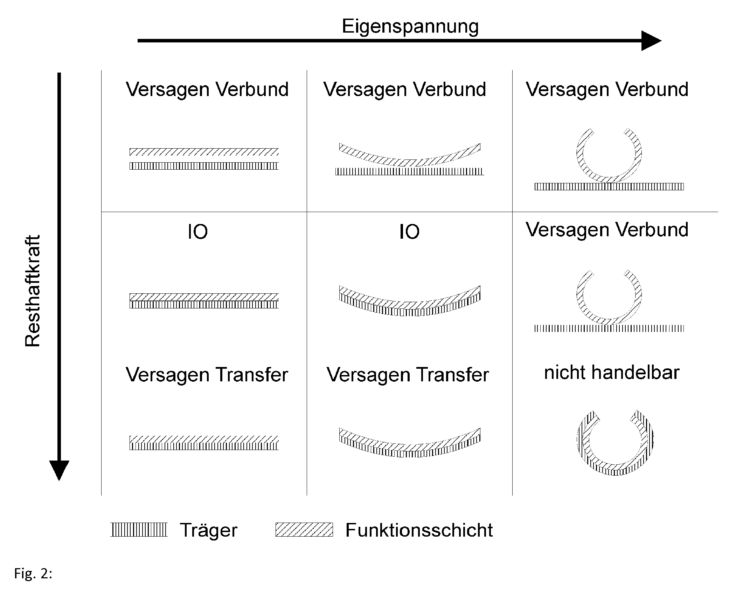

Fig. 2 zeigt schematisch mögliche Situationen bei Kombinationen aus verschiedenen Werten für die Eigenspannung und der Resthaftkraft der Funktionsschicht.

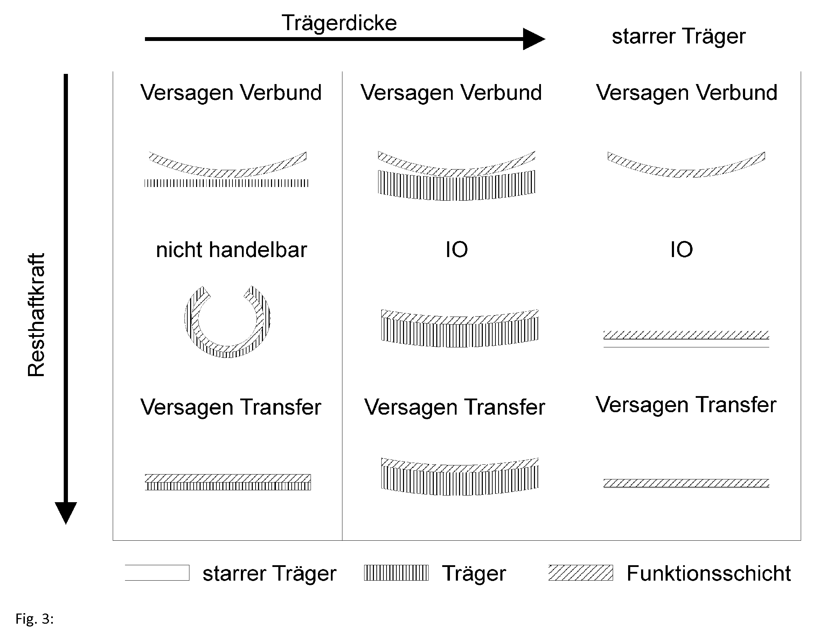

Fig. 3 zeigt schematisch mögliche Situationen bei Kombinationen aus verschiedenen Werten für die Eigenspannung und Steifigkeit des Trägers. Die beschriebenen Fehlerbil-der dienen dem Fachmann zur Beurteilung und Optimierung des Verbundes.

Dabei hat es sich herausgestellt, dass es sinnvoll ist, das Aktivierungsverfahren so zu führen, dass die Ebene mit der geringsten Festigkeit (Haftkraft) (ausdrückbar über die Schälkraft) innerhalb der Trägerfunktionsschichtanordnung innerhalb des Trägermaterials liegt. Dies bedeutet, man ist im Sinne der Figur 1 in dem Bereich III, wo bereits deutliche Materialvorschwächung des Polymers vorliegt, so dass der Kohäsionsbruch innerhalb des Trägermaterials stattfinden kann. Dies kann der Fachmann erreichen, indem er eine ausreichende "Aktivierungsenergie" in das Trägermaterial einbringt. Dies kann beispielsweise über die eingekoppelte Plasmaleistung erfolgen oder über die Aktivierungszeitdauer. Ein weiterer Steuerparameter ist über die Wahl des Arbeitsgases gegeben, wie z. B. Wasserstoff oder Sauerstoff oder deren Mischung, mittels derer z. B. zusätzliche Funktionen in die zu beschichtende Oberfläche eingeführt werden können. So führt Sauerstoff als Arbeitsgas beispielsweise dazu, dass zusätzliche Sauerstoffatome in die Polymeroberfläche des Trägers eingebaut werden und diese so reaktiver machen. Dieses führt aber gleichzeitig zu oberflächennahen Bindungsbrüchen innerhalb des Polymermaterials, so dass letzeres geschwächt wird. Die Wirkungsweise von Wasserstoff ist im Rahmen eines plasmapolymeren Aktivierungssverfahrens beispielsweise dadurch gegeben, dass Wasserstoff zu harter UV- und VUV-Strahlung führt, was ebenfalls zu Bindungsbrüchen im Polymer führt.

Eine weitere Steuergröße ist der Einsatz von lonenbeschuss. Dieser kann realisiert werden durch Positionierung des Trägermaterials in die Nähe oder auf einer mit Vorspannung (BIAS) belegten Elektrode. Die Erhöhung der BIAS-Spannung führt zu einer erhöhten Strukturschwächung des Trägermaterials und zu einer Verschiebung der derart eingeführten Sollbruchstelle tiefer in das Trägermaterial hinein. Noch ein weiterer Steuerparameter bei einer Plasmaaktivierung und Einstellung der Strukturschwächung ist die Anregungsfrequenz. Dementsprechend ist es bevorzugt, dass die Aktivierung so ausgeführt wird, dass die Strukturschwächung des Trägermaterials dermaßen ausgestaltet ist, dass bei Trennung der Funktionsschicht vom Träger Schichtbereiche von Trägermaterial einer Stärke von 1 - 1000 nm auf der Funktionsschicht verbleiben.

Weiter bevorzugt ist es, dass maximal Schichtbereiche vom Trägermaterial einer Stärke von maximal 100 nm und insbesondere maximal 50 nm und ganz besonders maximal 30 nm nach der Trennung auf der Funktionsschicht verbleiben,

Ganz bevorzugt im Sinne der Erfindung ist, dass das auf der Funktionsschicht verbleibende Material vom Träger eine Stärke von 2 - 50 nm, weiter bevorzugt von 3 - 30 nm besitzt.

Die Schichtstärken werden mehrfach punktuell über eine Fläche von 1 cm² bestimmt. Nach geeigneter Kalibrierung kann beispielsweise eine TOF-SIMS-Tiefenmessung (Time of flight second ion mass spectroscopy) die Bestimmung der nach Trennung übertragenden Schichtdicke ermöglichen, eine andere Möglichkeit bieten REM (Rasterelektronenmikroskopie) oder TEM-Untersuchungen (Transmissions-Elektronen-spektroskopie) bei Betrachtung des Schichtquerschnitts. Im Zweifelsfall erfolgt eine Mittelung über 10 TOF-SIMS-Tiefenmessungen.

Es sei angemerkt, dass eine Aktivierung bei der Erstellung einer erfindungsgemäßen Trägerfunktionsschichtanordnung sowie der beschriebene Kohäsionsbruch im Trägermaterial durch den Fachmann spätestens nach der Trennung durch Oberflächenuntersuchung feststellbar ist. So kann er beispielsweise über XPS-Messungen (X-ray Photoelectron Spectroscopy) die Oberflächenzusammensetzung detektieren oder TOF-SIMS Tiefenprofile über die Elementzusammensetzung erstellen und so beispielsweise zusätzliche Sauerstofffunktionen erkennen, die auf eine Aktivierung hinweisen.

Für die Aktivierung des polymeren Trägers können erfindungsgemäß alle gängigen Verfahren zur Oberflächenaktivierung eingesetzt werden, z. B. Plasmaaktivierung, Coronaaktivierung, Beflammung, UV- bzw. VUV-Strahlungsaktivierung (auch mittels eines Lasers) oder Elektronenbeschuss. Es ist auch möglich, zunächst eine Aktivierung zur Haftungssteigerung er erzeugen und im Anschluss eine (lokale) Strukturschwächung in einem zweiten Behandlungsschritt zu erzielen oder umgekehrt.

Im Sinne der Erfindung bevorzugt ist ein Aktivierungsverfahren aus der Gruppe bestehend aus Behandlung mit reaktivem, nicht-schichtbildendem Gas, Elektronenbeschuss, UV-Bestrahlung, VUV-Bestrahlung, lonenbeschuss oder einer Kombination von zwei oder mehr dieser Verfahren.

Ganz besonders bevorzugt ist das Aktivierungsverfahren eine Plasmabehandlung ohne schichtbildende Gase (i) mit oder (ii) ohne lonenbeschuss.

Weiter bevorzugt wird die Aktivierung mit Hilfe einer Niederdruckplasmaaktivierung erzeugt. Hierzu werden keine schichtbildenden Prozessgase eingesetzt, welche Kohlenstoff oder Silizium enthalten, sondern dem Fachmann typische Arbeitsgase zur Aktivierung wie Sauerstoff, Wasserstoff, Edelgase (z.B. Argon), Ammoniak (NH₃), Stickstoffmonoxid (N₂O) Wasserdampf (H₂O) oder andere. Auch Gemische der Aktivierungsgase sind möglich. Besonders bevorzugt sind hier Wasserstoff-Sauerstoffgemische.

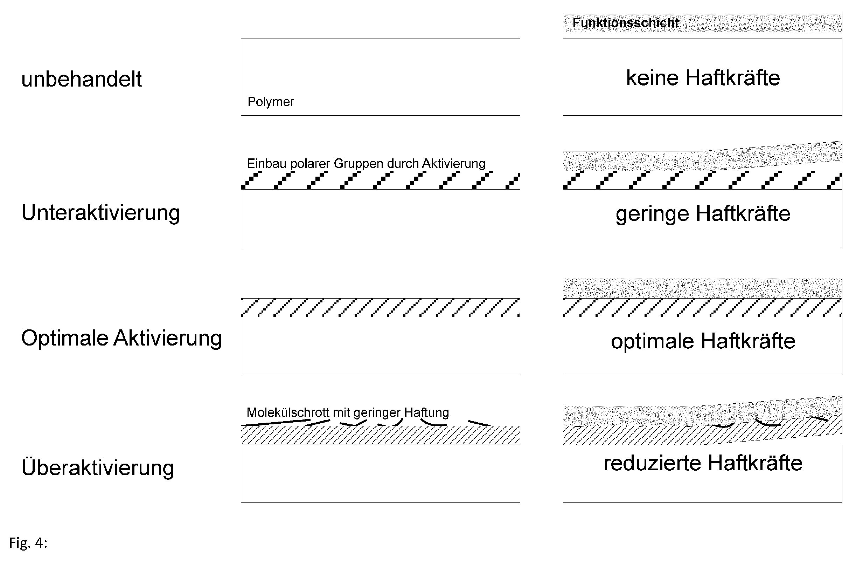

Die Fig. 4 zeigt - ohne an eine Theorie gebunden zu sein - schematisch eine Vorstellung der Vorgänge bei der Aktivierung mit einem Sauerstoffplasma. Der unbehandelte polymere Träger weist zunächst keine aktivierte Oberfläche auf, es sind keine polaren Gruppen in seine Oberfläche eingebaut. Entsprechend kann die Funktionsschicht keine Haftung zum Träger aufbauen. Die internen Spannungen oder das Handling führen dazu, dass die Funktionsschicht sich vom Träger löst. Bei geringer Aktivierungsintensität erhöht sich der Anteil der polaren Gruppen in der Oberfläche, so dass verbesserte Haftungsbedingungen für die Funktionsschicht gegeben sind. Sind die internen Spannungen der Funktionsschicht kompensiert, so ist der Verbund stabil, kann aber anschließend aufgrund der noch nicht ausreichenden Aktivierung (Unteraktivierung) und der hierdurch bedingten geringen Haftkräfte wieder getrennt werden. Im Bereich der optimalen Aktivierung ist die Haftung der Funktionsschicht auf dem Träger so hoch, dass der Verbund stabil ist, eine Trennung beider Partner aber nicht mehr handhabbar möglich ist. Im Bereich der Überaktivierung (Bereich III aus Fig. 1) findet die Funktionsschicht ausreichend Haftung zum Träger. Die polymere Struktur ist jedoch derart geschwächt, dass ein oberflächennaher Kohäsionsbruch im Träger wiederum eine Trennung erlaubt.

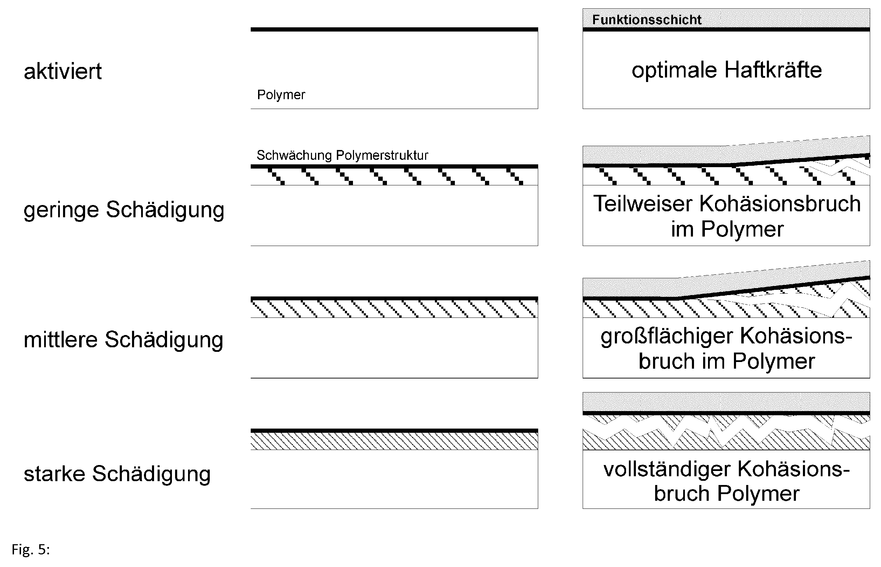

Fig. 5 zeigt - ohne an eine Theorie gebunden zu sein - schematisch die möglichen Vorgänge, die bei einer Aktivierung einer bereits zuvor aktivierten Polymeroberfläche erfolgen können (für ein mehrstufiges Verfahren zur Einstellung der Schälkraft und der Kohäsionsbruchfläche). Durch die Aktivierung ist die Oberfläche haftungsfreudig und die Funktionsschicht findet optimale Haftung. Eine Trennung beider Partner ist nicht möglich. Durch die fortgesetzte Aktivierung mittels Wasserstoff als Prozessgas entsteht ein vergleichsweise großer Anteil an UV- und VUV-Strahlung im Plasma, welche in die Oberfläche des Polymers eindringt und zu Bindungsbrüchen führt. Die Bindungsbrüche schwächen die Polymerstruktur und führen letztlich zu einem Zusammenbruch, welcher faktisch die Trennung zwischen Träger und Funktionsschicht darstellt. Der Fachmann muss die Schwächung derart einstellen, dass eine spätere Trennung möglich ist, der verbleibende Strukturzusammenhalt aber mindestens so hoch ist, dass interne Spannungen in der Funktionsschicht geeignet kompensiert werden können.

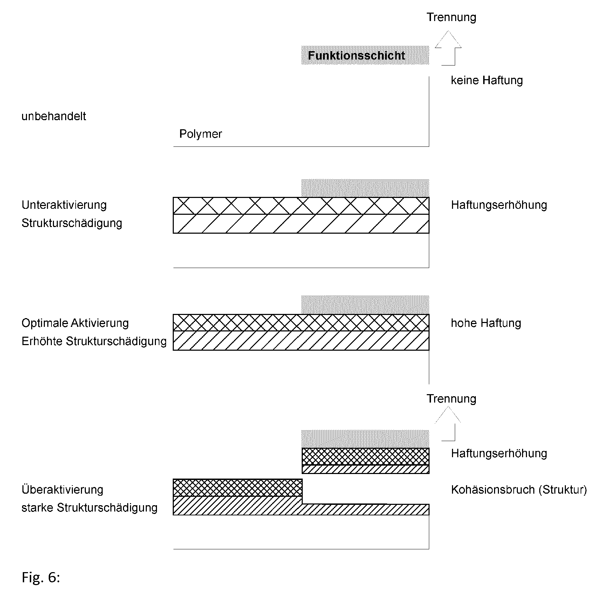

Fig. 6 zeigt - ohne an eine Theorie gebunden zu sein - schematisch die möglichen Vorgänge, die bei der Plasmaaktivierung mit einem Wasserstoff-Sauerstoffgemisch entstehen können. Der unbehandelte polymere Träger weist zunächst keine aktivierte Oberfläche auf. Als Folge kann die Funktionsschicht nur unzureichend Haftung zum Träger aufbauen. Die internen Spannungen oder die über die Zeit eindringende Feuchtigkeit oder das Handling führen dazu, dass die Funktionsschicht sich vom Träger löst. Bei geringer Aktivierungsintensität im Bereich der Unteraktivierung erhöht sich die Haftung der Funktionsschicht durch die Sauerstoffaktivierung (Einbau von polaren Gruppen). Sobald die internen Spannungen der Funktionsschicht ausreichend kompensiert sind, ist der Verbund stabil und handelbar. Eine nachträgliche Trennung zwischen Polymer und Funktionsschicht ist aufgrund der geringen Haftungskräfte dennoch möglich. Die polymere Struktur wird durch die Wasserstoffbehandlung geschwächt, ist zu diesem Zeitpunkt dennoch stabil genug und nicht relevant. Im Bereich der optimalen Aktivierung sind die Haftungskräfte durch die Sauerstoffbehandlung zu groß, eine Trennung zwischen Funktionsschicht und polymeren Träger findet nicht mehr statt, sofern die Strukturschädigung noch wenig ausgeprägt ist. Erst bei weiterer Plasmabehandlung wird die Strukturschwächung durch Überaktivierung und strahlungsbedingter Fragmentierung relevant und führt beim späteren Ablösen zu einem oberflächennahen Kohäsionsbruch im Polymer.

Forciert werden kann die Strukturschwächung zum Beispiel durch eine BIAS-geregelte Plasmabehandlung, wodurch die Plasmaaktivierung einerseits intensiviert werden kann und der lonenbeschuss zu einer verstärkten Strukturschwächung beiträgt. Somit ist insbesondere durch die BIAS-Spannung ein geeigneter Steuerparameter gegeben, mit dem der Fachmann die Haftungskräfte und die Prozesszeiten steuern kann.

Die weiteren Ausführungen sowie die Beispiele versetzen den Fachmann in die Lage, die notwendigen Aktivierungsparameter für die gewünschte erforderliche Schälkraft (im Schälabzugstest) und die gewünschte Kohäsionsbruchebene bei der Aktivierung angemessen für die gewünschten Materialkombinationen aus Trägermaterial und Funktionsbeschichtungsmaterial einzustellen. Somit stellt die Erfindung dem Fachmann ein System zur Verfügung, für eine Vielzahl von Materialkombinationen entsprechende Trenneigenschaften einzustellen, ohne das spezielle Trennmittel, wie z. B. Trennschichten eingeführt werden müssen.

Dabei hat es sich herausgestellt, dass es schon aus Gründen der Handhabbarkeit sinnvoll ist, in der erfindungsgemäßen Träger-Funktionsschichtanordnung die für die Trennung vom Träger zu überwindende Haftkraft (gemessen als Schälkraft) einzustellen. Erfindungsgemäß bevorzugt sind dabei Bereiche einer Schälkraft, die für die Trennung der Funktionsschicht vom Träger überwunden werden muss im Bereich 0,1 - 10 N/cm und besonders bevorzugt im Bereich von 0,4 - 10 N/cm. Die Schälkraft kann dabei wie in den Beispielen beschrieben bestimmt werden, bevorzugt in Anlehnung an die Norm oder insbesondere gemäß DIN 1939:2003 im 180° Schälabzugstest.

Hierbei ist auch bei dem gegebenen, erfindungsgemäß einzustellenden Schälkraftfenster durch den Fachmann zu berücksichtigen, dass die Schälkraft zwischen Träger und Funktionsschicht natürlich nicht höher sein darf, als die Kohäsionskraft innerhalb der (ggf. unbehandelten) Funktionsschicht und innerhalb des unbehandelten Trägers. Andernfalls würde der Kohäsionsbruch bei der Trennung an unerwünschten Stellen auftreten.

Die eingestellte Schälkraft und die eingestellte Kohäsionsbruchfläche innerhalb des Trägers bewirken, dass gewährleistet ist, dass die Funktionsschicht vollständig nach der Trennung übertragen wird. Dies bedeutet, der Trennvorgang führt zu keiner Schädigung der Integrität der Funktionsschicht. Bei der Einstellung der Schälkraft im Verbund berücksichtigt der Fachmann ferner die Schichteigenspannung der jeweiligen Funktionsschicht.

In der Regel weist die Funktionsschicht eine gewisse Eigenspannung auf, die zu einer selbstständigen mechanischen Verformung der Schicht führen kann, sofern keine kompensierenden Maßnahmen vorgenommen werden. Beispielsweise kann sich eine beschichtete Folie aufrollen. Mechanische Verformungen können beispielsweise durch einen dickeren oder starren Träger reduziert werden, so dass der Verbund handelbar wird.

Die erfindungsgemäße Träger-Funktionsschichtanordnung kann erfindungsgemäß zu einem späteren Zeitpunkt getrennt werden. Diese Forderung hat zur Folge, dass die Haftungskräfte nach oben bzw. die Strukturschwächung nach unten begrenzt sind. Sind die zu kompensierenden Eigenspannungskräfte der Funktionsschicht zu hoch, kann kein stabiler, wiederlösbarer Verbund hergestellt werden. Insofern besteht die Notwendigkeit, die Eigenspannung zu messen. Hierfür kennt der Fachmann geeignete Verfahren.

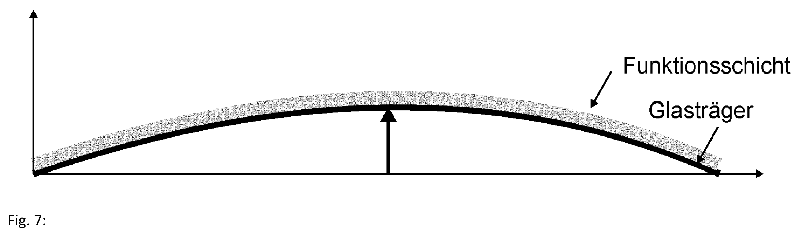

Beispielsweise kann die Funktionsschicht auf einen dünnen Glasobjektträger aufgebracht werden. Anschließend kann die spannungsbedingte Durchbiegung des Glases mittels eines Abtastgerätes ermittelt werden (Fig. 7). Die Durchbiegung kann als Maß für die Höhe der Eigenspannung verwendet werden oder hieraus rechnerisch die Eigenspannung explizit bestimmt werden.

Ist es dem Fachmann nicht möglich, einen stabilen, wiederlösbaren Verbund durch Variation der Aktivierungsparameter einzustellen, so hat der Fachmann zu untersuchen, ob es möglich ist, die Eigenspannungen der Funktionsschicht zu reduzieren. Alternativ können Trägervariationen eingesetzt werden.

Bevorzugt ist eine erfindungsgemäße Träger-Funktionsschichtanordnung, wobei das Material des Trägers ausbildet ist aus der Gruppe der Thermosplasten, insbesondere aus der Gruppe bestehend aus PP (Polypropylen), PVC (Polyvinylchlorid), PE (Polyethylen), PET (Polyethylenterephthalat), PUR (Polyurethan) und PA (Polyamid) und/oder die Funktionsschicht ausgewählt ist aus der Gruppe bestehend aus Lack, plasmapolymere Beschichtung, Sol-Gel Beschichtung, Metallisierungsschicht, Keramikschicht, Farbe und Elastomer insbesondere plasmapolymere Kratzschutzbeschichtung.

Dabei kann der Träger für viele Fälle als Folie ausgestaltet sein. Die Funktionsschicht kann flexibel ausgestaltet sein. Das beutetet sie ist, ohne irreversible Verformungen auf einer Rolle mit einem Wickeldurchmesser von mindestens 10 cm bevorzugt 1 cm weiter bevorzugt 1 mm wickelbar. Dies gilt auch für Folien.

Wie bereits oben angedeutet, kann die Funktionsschicht verschiedene Funktionen bevorzugt umfassen. Sie kann z. B. ein dekoratives Element bestehend aus einer Farbe oder einem Lack sein, ein schützendes Element sein, z.B. eine Kratzschutzbeschichtung, eine Barrierebeschichtung oder eine Metallisierung und/oder eine Korrosionsschutzschicht oder eine andere Funktion beinhalten (z.B. antimikrobielle Funktion). Bevorzugt sind nicht-thermoplastische Funktionsschichten, besonders bevorzugt Kratzschutzbeschichtungen, ganz besonders bevorzugt plasmapolymere Kratzschutzbeschichtungen.

Bevorzugt wird die Aktivierung und die Funktionsschichtabscheidung mittels eines Plasmaprozesses durchgeführt, wobei beide Schritte als Teilschritte eines Gesamtprozesses unmittelbar aufeinander folgen, d.h. z.B. die Niederdruckbedingungen bleiben über die gesamte Prozessdauer erhalten.

Bevorzugt sind die Funktionsschichten plasmapolymere Schichten oder Duromere oder (Kratzschutz)lacke (thermisch oder UV-härtend) oder andere Harze oder Sol-Gel Schichten, wiederum bevorzugt als Kratzschutzbeschichtungen ausgestaltet, ganz besonders bevorzugt plasmapolymere Kratzschutzbeschichtungen wie in der Anmelldung mit dem deutschen Aktenzeichen 10 2009 000 699.0 beschrieben.

Grundsätzlich kann es sinnvoll sein, die Funktionsschicht nach ihrem Entstehen (z. B. nach Ihrer Abscheidung) auf der vom Träger abgewandten Seite weiter zu prozessieren. Dies kann z. B. durch Aktivierung der Funktionsschicht zur Verbesserung der Haftung an das (Ziel-)Substrat geschehen. Weitere Alternativen sind z. B. das Auftragen von zusätzlichem Primer- bzw. Haftvermittlermaterial. Dies bietet sich insbesondere dann an, wenn die Funktionsschicht auf dem Zielsubstrat z. B. mit einer speziellen Klebstoffschicht befestigt werden sollen.

Bestandteil der Erfindung ist auch ein Verfahren zum Herstellen einer erfindungsgemäßen Trägerfunktionsschichtanordnung, umfassend die Schritte:
a) Bereitstellen eines Trägers,
b) Aktivieren der durch eine Funktionsschicht zu beschichtenden Oberfläche des Trägers mittels eines Aktivierungsverfahrens und
c) Beschichten des Trägers nach Schritt b) mit einer Funktionsschicht,
wobei der Schritt b) so ausgeführt wird, dass (i) die Ebene mit der geringsten Festigkeit innerhalb der Träger-Funktionsschichtanordnung innerhalb des Trägermaterials liegt und (ii) die bei Trennung der Funktionsschicht vom Träger zu überwindende Schälkraft 0,1 - 10 N/cm beträgt.

Dabei ist bevorzugt, dass das Aktivierungsverfahren im Schritt b eines der oben beschrieben Aktivierungsverfahren ist, insbesondere eines der bevorzugten, und ganz besonders bevorzugt ausgewählt aus der Gruppe bestehend aus Behandlung mit reaktivem, nicht-schichtbildendem Gas, Elektronenbeschuss, UV-Bestrahlung, VUV-Bestrahlung, lonenbeschuss oder einer Kombination von zwei oder mehr dieser Verfahren.

Bevorzugt erfolgt das Aktivierungsverfahren in Form einer Plasmabehandlung ohne schichtbildende Gase(i) mit oder (ii) ohne lonenbeschuss.

Wie bereits oben beschrieben werden auch im erfindungsgemäßen Verfahren bevorzugt die Haftungsverhältnisse mittels Prozessgaszusammensetzung, Aktivierungsdauer, eingekoppelter Plasmaleistung und/oder BIAS-Spannung gesteuert.

Dabei ist es bevorzugt, eine BIAS-Spannung einzusetzen, weil somit kurze Prozesszeiten ohne übermäßig großen technischen Aufwand ermöglicht werden können.

Wie ebenfalls bereits oben beschrieben kann eine Strukturschwächung für das erfindungsgemäße Verfahren mittels einer Aktivierung im Bereich der Überaktivierung erzeugt werden (Bereich III aus Fig. 1), auch durch Bestrahlung mittels Licht, zum Beispiel UV- oder VUV-Licht.

Bevorzugt kann die Strahlung aus einem Plasmaprozess stammen und mit einer Aktivierung kombiniert werden (z.B. Wasserstoff-Sauerstoff - Plasma), da das Plasma selbst auch eine geeignete Strahlungsquelle darstellt (insbesondere das Wasserstoffplasma). Eine Aktivierung in Kombination mit einer Strukturschwächung kann auch aus mehreren Teilschritten bestehen, bei den zunächst eine Aktivierung und anschließend eine Strukturschwächung erzeugt wird oder umgekehrt oder im Wechsel.

Weiterhin kann die Strukturschwächung auch durch Elektronenbeschuss oder Ionenbeschuss forciert werden. Bevorzugt wird der polymere Träger während einer Plasmaaktivierung in die Nähe einer oder direkt auf eine Elektrode mit Vorspannung gelegt (Elektrode mit BIAS), so dass ein fortwährender lonenbeschuss während der Aktivierung stattfindet und gleichzeitig die Strahlungsintensität und somit die Aktivierungsintensität in der Nähe der polymeren Trägers erhöht wird. Bevorzugt wird eine BIAS-gesteuerte Niederdruckplasmaaktivierung mit einem Wasserstoff-Sauerstoffgemisch als Prozessgas. Diesem können auch Edelgase, insbesondere Ar beigemischt sein, um den lonenbeschuss zu intensivieren.

Erfindungsgemäß bevorzugt wird außerdem die trägerabgewandte Aktivierung der Funktionsschicht. Eine Aktivierung der Funktionsschicht mittels bekannter Verfahren verbessert die anschließende Haftung an ein funktionsschichtseitig zusätzlich aufgetragenes Material, z.B. einer Schmelze im Spritzguss, einen Klebstoff, oder ein Elastomer.

Bevorzugt wird die Aktivierung des Trägers, die Funktionsschichtabscheidung und/oder die Aktivierung der Funktionsschicht mittels eines Plasmaprozesses durchgeführt, wobei somit ggf. alle drei Schritte als Teilschritte eines Gesamtprozesses unmittelbar aufeinander folgen, d.h. z.B. die Niederdruckbedingungen bleiben über die gesamte Prozessdauer erhalten.

Teil der Erfindung ist auch die Verwendung einer erfindungsgemäß Trägerfunktionsschichtanordnung zum Versehen eines Bauteiles mit einer Funktionsschicht, insbesondere in einem Spritzgussverfahren, Gießverfahren, Klebeverfahren, Laminierverfahren, Lackierverfahren, Vulkanisationsverfahren. Als Spritzgussverfahren eignen sich ganz besonders die oben beschriebenen Verfahren.

Dementsprechend ist auch Teil der Erfindung ein Verfahren zur Herstellung eines Bauteils mit einer Funktionsschicht umfassend die Schritte:
a) Bereitstellen einer erfindungsgemäßen Trägerfunktionsschichtanordnung,
b) Beschichten der Funktionsschicht mit Bauteilmaterial und
c) Abziehen des Trägers von der Funktionsschicht.

Schritt a) kann zum Beispiel eine mechanische Fixierung umfassen oder das Einlegen des Träger-Funktionsschichtanordnung in eine Klebvorrichtung oder in ein geöffnetes Formwerkzeug für den Spritzgussbereich.

Entsprechend dem bekannten IMD-Verfahren kann die Träger-Funktionsschichtanordnung auch aufgerollt als Bahnware vorliegen und mechanisch vor dem geöffneten Formwergzeug nach jedem Prozesszyklus durch geeignete Walzen vorwärts transportiert werden, so dass immer ein unbenutzter frischer Bereich des Verbundes vor die Werkzeugkavität geführt wird.

Der funktionsschichtseitige Auftrag eines weiteren Bauteilmaterials kann händisch oder automatisiert erfolgen. Bei dem weiteren Material kann es sich um eine Schmelze (z.B. im Spritzguss), einen Klebstoff oder einer vulkansationsfähigen Masse handeln. Auch weitere Alternativen sind vorstellbar, z.B. Faser/Harz-Gemische im CFK oder GFK-Bereich.

Im Falle eines Spritzgusswerkzeugs wird die Träger-Funktionsschichtanordnung funktionsschichtseitig hinterspritzt (InMould-Technik). Bevorzugt werden plasmapolymere Funktionsschichten auf diese Weise hinterspritzt (InMould-PlasmaCoating).

Wie bereits oben angedeutet ist es möglich die erfindungsgemäße Träger-Funktionsschichtanordnung als Massenware auszugestalten. Insbesondere in solchen Fällen ist es bevorzugt, dass die eingesetzten Träger Folien eine Schichtdicke von 50 - 1000 µm, bevorzugt 50 - 500 µm besitzen.

Es ist auch möglich, dass es sich bei den erfindungsgemäß einzusetzenden Träger um keine in sich geschlossenen Folien handelt oder um besonders zugeschnittende Folien handelt, die Folie zum Beispiel Fenster oder Löcher oder eine besondere Form (Stern, Kreis, Schriftzug etc.) aufweist, die in einem Stanz- oder Schneidprozess in die Folie eingebracht wurden. Dieser Ansatz bewirkt die lokale Übertragung der Funktionsschicht. Eine weitere Möglichkeit besteht darin, die Löcher oder Fenster oder die Form nachträglich in den fertigen Träger-Funktionsschichtverbund einzuarbeiten. Ebenso ist denkbar, die Funktionsschicht mittels Masken nur auf lokalen Bereichen des Trägers aufzubringen und den Träger ggf. im Anschluss zu bearbeiten. Schließlich besteht die Möglichkeit der lokalen Überaktivierung einer aktivierten Folie, um die Funktionsschicht lokal zu übertragen.

Weiterhin sind polymere Träger vorstellbar, die eine flexible dreidimensionale Struktur aufweisen. Oder Träger, die eine Oberflächentopographie aufweisen (z.B. Mikro- oder Nanostruktur), die sich auf die Funktionsschicht überträgt und somit Bestanteil der Funktionsschicht wird.

Es ist aber auch möglich, den Träger starr auszugestalten, beispielsweise als polymeres Negativ einer abzuformenden Oberfläche in beliebiger Schichtdicke.. Es ist jedoch erfindungsgemäß in manchen Fällen bevorzugt, dass der Träger selbst kein Formteil ist.

Wie in den nachfolgenden Beispielen weiter erläutert, hat sich zur Aktivierung im Rahmen einer plasmapolymeren Aktivierung mittels eines nicht schichtbildenden reaktiven Gases als besonders effektiv ein Gemisch auf Wasserstoff- und Sauerstoffgas als Arbeitsgas herausgestellt. Bevorzugte Mischungsverhältnisse H₂ zu O₂ sind 80:20 bis 20:80, besonders bevorzugt 50:50 - 80:20, jeweils bezogen auf die Volumenverhältnisse.

Für das erfindungsgemäße Verfahren ist die Zeitdauer / Einwirkdauer des Aktivierungsschrittes bevorzugt ≤ fünf Minuten, besonders bevorzugt ≤ eine Minute.

Die nachfolgenden Beispiele dienen dazu die Erfindung weiter zu erläutern und den Fachmann wertvolle Hinweise über die Wirkweise einzelner Parameter bei der Aktivierung:

### Beispiel 1:

Auswahl von mehreren polymeren Trägermaterialen in Folienform:
A) Hart PVC: Dicke 150µm
B) PET Melinex: 175µm
C) Hostaphan PET: 50µm
D) PP: 100µm

Aktivierung der Folien mittels eines Niederdruckplasmaprozesses in einem 0,3m³ Reaktor bei einer eingekoppelten Leistung von 1000W. Als Arbeitsgas wurde Sauerstoff verwendet, dazu kommen Restverunreinigungen, die bei einer industriellen Beschichtungsanlage nicht vermeidbar und üblich sind, z.B. Wasserdampf aus der Umgebungsluft. Die Folien wurden auf eine Elektrode mit Vorspannung (BIAS) positioniert. Die BIAS-Spannung betrug 650V. Die Zeitdauer der Aktivierung wurde variiert im Bereich von 30s bis zu 240s. Auf die aktivierte Polymeroberfläche wurde im Anschluss als Funktionsbeschichtung eine plasmapolymere Kratzschutzschicht aufgetragen (Prozessparameter Tab.1). Die Kratzschutzschicht wurde in drei Teilschritten aufgebracht: 1. Anbindungsschritt, 2. Kratzschutzschicht, 3. Aktivierung der Kratzschutzschicht. Die Schichtdicke kann sehr einfach über die Zeitdauer des Teilschritts 2 variiert werden. Die Schichtdicke der Kratzschutzbeschichtung betrug 1930nm, die Durchbiegung aufgrund der internen Spannungen betrug 430mm, gemessen auf einem Glasträger (Dicke 150µm) entlang einer Strecke von 50mm (zur Messung siehe Beschreibung weiter oben und Fig. 7). Die Schichtstabilität wurde nach 24h bzw. 7d nach der Herstellung optisch bewertet. Auf den Verbund wurde funktionsschichtseitig nach 48h manuell ein Klebstoff aufgebracht (Araldit 2010), auf den Klebstoff wiederum eine optimal aktivierte PET Folie (im folgenden Zugfolie) mit einer beginnenden Verformung bei einer anliegenden Zugkraft von 10 N/cm aufgebracht. Diese Zugfolie wurde nach Aushärtung des Klebstoffs manuell abgezogen. Bei einem gelungenen Transfer der Kratzschutzschicht vom Träger wird die Zugfolie mitsamt des Klebstoffs und der Funktionsschicht von der Trägerfolie abgezogen (IO-Fall). Sind die Haftkräfte zwischen der Trägerfolie und der Funktionsschicht zu hoch, so reißt in der Regel die Zugfolie oder sie wird stark gedehnt (NIO-Fall). Dokumentiert wurde der subjektive Eindruck über die notwendigen Ablösekräfte beim Abzug der Zugfolie bzw. die Kraft, die zur Trennung zwischen Funktionsschicht und Träger aufzubringen ist. Weiterhin wurde der Transfer mittels eines Mikroskops bewertet und den Prozentsatz des Schichttransfers dokumentiert.

Die Ergebnisse sind in Tabelle 2 aufgelistet. Für die angegebenen Prozessdaten ist für Hart PVC eine Mindestaktivierungsdauer von 60s notwendig, um eine anschließende Trennung zu ermöglichen. Eine Erhöhung der Aktivierungszeit zeigt, dass die Haftkräfte abnehmen. Eine Behandlungszeit von 240s führt dagegen zu einer Strukturschwächung, die die internen Spannungskräfte der Kratzschutzschicht nicht mehr kompensieren kann.

Für die Melinex PET Folie kann bereits ohne Aktivierung ein stabiler Verbund hergestellt werden. Dennoch zeigt sich, dass die Haftkräfte ohne Aktivierung zu gering sind. Der Kontakt des Klebstoffs bzw. Spannungen, die beim Aushärten des Klebstoffs auftreten, reichen aus, um die Funktionsschicht rissig werden zu lassen. Eine geringe Aktivierung von 30s reicht aus, um die Haftkräfte derart zu erhöhen, dass ein sauberer, rissfreier Funktionsschichtübertrag stattfinden kann. Eine weitere Erhöhung der Aktivierungsintensität führt dagegen zu einem instabilen Träger/Funktionsschicht- Verbund.

PET Hostaphan zeigt ein nahezu identisches Verhalten bei Variation der Aktivierungsdauer. Für PP konnten mittels reiner Sauerstoffaktivierung keine stabilen Verbünde hergestellt werden.

**Tab. 1: Prozessparameter Kratzschutzschicht (1930nm) - Beispiel 1**

| **Prozessgas** | **Teilschritt 1** | **Teilschritt 2** | **Teilschritt 3** |
|---|---|---|---|
| O2 | 50 sccm | 140 sccm | 50 sccm |
| HMDSO | 50 sccm | 40 sccm | |
| Leistung [W] | 170-190 | 270-300 | 146 |
| BIAS | 100 | 150 | 150 |
| Zeitdauer[s] | 180 | 1000 | 60 |
| Druck [mbar] | 0,024 | 0,037 | 0,019 |

**Tab. 2: Bewertung des Schichttransfers Beispiel 1**

| **Material** | **Aktivierungsdauer [s]** | **Verbundstabilität** | | **manueller Abzug / (Schälkraft)** | **Schichttransfer (Übertrag)** |
|---|---|---|---|---|---|
| | | **24h** | **7d** | | |
| | 0 | IO | IO | NIO | - |
| HART PVC | 30 | IO | IO | NIO | - |
| | 60 | IO | IO | IO (mittel) | IO (100%) |
| | 120 | IO | IO | IO (gering) | IO (100%) |
| | 240 | Rissig | - | - | - |
| | 0 | IO | IO | IO (gering) | Rissig (100%) |
| | 30 | IO | IO | IO (geringer) | IO (100%) |
| PET Melinex | 60 | Teilweise Ablösung | Teilweise Ablösung | IO (sehr gering) | IO (100%) |
| | 120 | NIO | - | - | - |
| | 240 | NIO | - | - | - |
| | 0 | IO | IO | IO (mittel) | Rissig (100%) |
| Hostaphan PET | 30 | IO | IO | IO (gering) | IO (100%) |
| | 60 | IO | IO | IO (gering) | IO (100%) |
| | 120 | NIO | - | - | - |
| | 240 | NIO | - | - | - |
| | 0 | NIO | - | - | - |
| | 30 | NIO | - | - | - |
| pp | 60 | NIO | - | - | - |
| | 120 | NIO | - | - | - |
| | 240 | NIO | - | - | - |

### Beispiel 2:

Aktivierung einer 100µm dicken PP-Folie mittels eines Niederdruckplasmaprozesses in einem 0,3m³ Reaktor bei einer vorgegebenen BIAS-Spannung von 100V (BIAS-gesteuerter Prozess mit einer eingekoppelten Leistung ca. 60-70W). Die Folien wurden auf eine Elektrode mit Vorspannung (BIAS) positioniert und 120s lang aktiviert. Als Arbeitsgas wurden Wasserstoff/Sauerstoffmischungen verwendet. Auf die derart aktivierte Polymeroberfläche wurde im Anschluss als Funktionsbeschichtung eine plasmapolymere Kratzschutzschicht aufgetragen (Parameter identisch zu Beispiel 1, außer Zeitdauer des Teilschritts 2: 1800s). Die Schichtdicke der Kratzschutzbeschichtung betrug ca. 3µm, die Durchbiegung aufgrund der internen Spannungen betrug ca. 250µm, gemessen auf einem Glasträger (Dicke 150µm) entlang einer Strecke von 50mm. Die Schichtstabilität wurde nach 48h nach der Herstellung optisch bewertet. Auf den Verbund wurde funktionsschichtseitig nach 48h manuell ein Klebstoff aufgebracht (Araldit 2010), auf den Klebstoff wiederum eine optimal aktivierte PET Folie (im folgenden Zugfolie). Diese Zugfolie wurde nach Aushärtung des Klebstoffs manuell abgezogen. Die Ergebnisse sind in Tabelle 3 dargestellt.

Tabelle 4 listet die Ergebnisse einer XPS-Analyse (X-ray Photoelectron Spectroscopy) der hergestellten Verbünde, wobei funktionsschichtseitig nach Trennung zwischen Träger und Kratzschutzschicht auf der polymeren Trägerseite gemessen wurde. Bei einem Verhältnis zwischen H₂ zu O₂ von 0 zu 100 Vol-% sorgt der Sauerstoff während der Plasmabehandlung für eine sehr gute Anbindung der Kratzschutzschicht an den polymeren Träger. Der Verbund lässt sich nicht trennen (optimale Aktivierung), da bei den angewandten Prozessparametern keine ausreichende Schwächung der Trägerstruktur stattgefunden hat.

Bei einem Verhältnis zwischen H₂ zu O₂ von 20 zu 80 Vol-% ist eine Trennung des Verbundes mit subjektiv hohen Kräften möglich. Die Elementverteilung offenbart, dass Reste der plasmapolymeren Kratzschutzbeschichtung auf der polymeren Trägerseite zu finden sind. Diese sind insbesondere durch die signifikanten Si-Anteile von 15,3 Atom-% zu identifizieren. Die Trennung zwischen Folie und Kratzschutzschicht hat somit primär in der Kratzschutzschicht stattgefunden. Ein weiteres Indiz hierfür ist das vergleichbare Verhältnis zwischen Sauerstoff und Silizium, welches für die Kratzschutzschicht bei 2,3 und für die funktionsschichtseitigen aktivierten (20 zu 80 Vol-%) Träger nach Trennung bei 2,4 liegt.

Weiterhin deutet der nachweislich erhöhte Kohlenstoffanteil (45,6 Atom-%) im Vergleich zur Kratzschutzschichtreferenz (19,3 Atom-%) darauf hin, dass der plasmapolymere Kohäsionsbruch grenznah in einem Bereich unterhalb von 10nm zur PP-Folie stattgefunden hat, so dass zu einem geringen Anteil der Kohlenstoffanteil der PP-Folie mitgemessen wurde (Informationstiefe der XPS-Messung ca. 10nm).

Bei einem Verhältnis von H₂ zu O₂ von 40 zu 60 Vol-% ist der Si-Anteil bereits deutlich reduziert. Dies deutet darauf hin, dass es sich in diesem Fall nicht mehr um einen reinen kohäsiven Bruch in der Kratzschutzschicht handelt. Wahrscheinlicher ist, dass aufgrund der Strukturschwächung im Trägerpolymer ein Mischbruch vorliegt. Die Trennkräfte im strukturgeschwächten PP sind niedriger als die Kräfte in der plasmapolymeren Kratzschutzschicht, so dass die Trennkräfte insgesamt reduziert sind.

Eine weitere Erhöhung des Wasserstoffanteils (60 zu 40 Vol-%) führt zu einem reinen Kohäsionsbruch im strukturgeschwächten PP. Dies ist erfindungsgemäß. Es ist kein Silizium nachweisbar, ein Indiz dafür, dass die Kratzschutzschicht vollständig auf den Klebstoff übertragen wurde. Die Strukturschwächung der PP-Folie wurde derart erhöht, dass die Trennkräfte beim Abzug weiter reduziert werden konnten. Für eine reine Wasserstoffaktivierung (100 zu 0 Vol-%) ist die Strukturschwächung so groß, dass die Eigenspannung der plasmapolymeren Kratzschutzbeschichtung dafür sorgen, dass die Schicht nicht mehr stabil ist, die Beschichtung zerbröselt.

**Tab. 3: Bewertung des Schichttransfers Beispiel 2 - PP Folie**

| **Material** | **Verhältnis H₂: O₂ Vol%** | **Verbundstabilität 48h** | **manueller Abzug / (Schälkraft)** | **Schichttransfer (Übertrag)** |
|---|---|---|---|---|
| | 0 : 100 | IO | NIO | - |
| | 20 80 | IO | NIO (sehr hoch) | - |
| PP | 40 : 60 | IO | 10/NIO (sehr hoch) | IO (?) |
| | 60:40 | IO | IO (mittel) | IO (100%) |
| | 80:20 | IO/NIO (einzelne Risse) | IO (gering) | IO (100%) |
| | 100 : 0 | NIO (Zerbröseln) | - | - |

**Tab. 4: XPS-Analyse der Elementverteilung Beispiel 2 - PP Folie**

| **Material** | **Verhältnis H₂ : O₂ Vol%** | **C (at%)** | **o (at%)** | **Si (at%)** | **N (at%)** |
|---|---|---|---|---|---|
| PP funktionsschichtseitig nach Trennung | 0:100 | nicht messbar, da Trennung nicht möglich (Trägerfolienriss beim Abzug) | | | |
| | 20 : 80 | 45,6 | 37,8 | 15,3 | 1,3 |
| | 40 : 60 | 90,3 | 7,0 | 2,2 | 0,5 |
| | 60 : 40 | 99,5 | 0,5 | 0 | 0 |
| | 80 : 20 | 99,1 | 0,4 | 0 | 0,5 |
| | 100:0 | nicht messbar, da Verbund nicht stabil (Zerbröseln) | | | |
| PP- Referenz | | 98,2 | 1,8 | 0 | 0 |
| KratzschutzSchicht | | 19,3 | 55,9 | 24,2 | 0,3 |

### Beispiel 3

Aktivierung von 100µm dicken PP-Folie einer Größe von 300mm x 40mm mittels eines Niederdruckplasmaprozesses in einem 0,3m³ Reaktor (BIAS-gesteuerter Prozess). Die Folien wurden auf eine Elektrode mit Vorspannung (BIAS) positioniert und 30s lang aktiviert. Als Arbeitsgas wurde ein Wasserstoff/Sauerstoffgemisch im Verhältnis 60 zu 40 Vol-% verwendet. Es fand eine Variation der angelegten BIAS-Vorspannung im Bereich von 50 bis zu 200V statt. Auf die derart aktivierte Polymeroberfläche wurde im Anschluss als Funktionsbeschichtung eine plasmapolymere Kratzschutzschicht aufgetragen (Parameter identisch zu Beispiel 1, außer Zeitdauer des Teilschritts 2: 1800s). Die Schichtdicke der Kratzschutzbeschichtung betrug ca. 3µm, die Durchbiegung aufgrund der internen Spannungen betrug 250 - 350µm, gemessen auf einem Glasträger (Dicke 150µm) entlang einer Strecke von 50mm.

Die so angefertigten Verbünde waren alle nach 48h weiterhin stabil und gut handelbar. Es zeigt sich, dass sich die Kratzschutzbeschichtung von allen Muster abziehen ließ und ein vollständiger Übertrag stattgefunden hat. Entsprechend zeigen alle Muster auf der funktionsschichtseitigen Polymerträgeroberseite nach Trennung keine Si-Anteile (siehe Tabelle 5). Somit liegt in allen Fällen ein Kohäsionsbruch im Trägerpolymer durch Strukturschwächung vor. Weiterhin ist in der XPS-Analyse zu erkennen, dass der Sauerstoffanteil in der getrennten Polymeroberfläche mit zunehmender BIAS-Spannung abnimmt. Der Sauerstoffanteil liegt zunächst oberhalb des Werts für die nicht behandelte PP-Referenz und sinkt anschließend für BIAS-Spannungen oberhalb von 150V unter das Niveau der PP-Referenz. Diese Beobachtung lässt sich bei Betrachtung der aktivierten PP-Oberflächen verstehen. Erwartungsgemäß wird durch das Sauerstoffplasma während der Aktivierung der Sauerstoffanteil in der Polymeroberfläche erhöht. Dies ist für eine gute Anhaftung der Kratzschutzschicht nützlich. Er liegt im Bereich 10 bis 20 Atom-%. Der Kohäsionsbruch im Träger nach Trennung findet sehr oberflächennah statt, so dass die zusätzlichen polaren Sauerstoffgruppen zu einem kleinen Anteil bei der XPS-Messung (Informationstiefe ca. 10nm) mit gemessen werden. Sofern der Bruch somit in einem Abstand zur Polymeroberfläche kleiner 10nm stattfindet (Informationstiefe XPS), so tragen die polaren Gruppen zu dem XPS-Signal bei. Dies ist der Fall für die BIAS-Werte bis zu 150V. Anschließend ist davon auszugehen, dass der Bruch in einer Tiefe größer 10nm stattfindet, so dass der Sauerstoffanteil deutlich fällt, die aktivierte Oberfläche wird innerhalb der XPS-Analyse nicht mehr erfasst.

**Tab. 5: XPS-Analyse der Elementverteilung Beispiel 3 - PP Folie**

| **Material** | **BIAS [V]** | **C (at%)** | **o (at%)** | **Si (at%)** | **N (at%)** |
|---|---|---|---|---|---|
| PP-Folie nach Aktivierung (funktionsschichtseitig) | 50 | 76,5 | 20,6 | 0 | 2,6 |
| | 75 | 82,5 | 15,3 | 0 | 2,0 |
| | 100 | 86,5 | 11,6 | 0 | 1,7 |
| | 150 | 83,9 | 15,4 | 0 | 0,7 |
| | 200 | 83,8 | 15,1 | 0 | 0,6 |
| PP funktionsschichtseitig nach Trennung | 50 | 99,8 | 0,2 | 0 | 0 |
| | 75 | 99,8 | <0,1 | 0 | 0,2 |
| | 100 | 99,2 | 0,3 | 0 | 0,5 |
| | 150 | 99,5 | 0,2 | 0 | 0,4 |
| | 200 | 99,6 | 0,2 | 0 | 0,2 |
| Funktionsschicht trägerseitig nach Trennung | 50 | 94,5 | 3,2 | 1,6 | 0,7 |
| | 75 | 95,6 | 2,4 | 1,6 | 0,4 |
| | 100 | 95,5 | 2,3 | 1,7 | 0,6 |
| | 150 | 97,7 | 1,5 | 0,8 | 0 |
| | 200 | 98,7 | 0,8 | 0,4 | 0 |
| PP- Referenz | | 98,2 | 1,8 | 0 | 0 |
| KratzschutzSchicht-Referenz | | 19,3 | 55,9 | 24,2 | 0,3 |

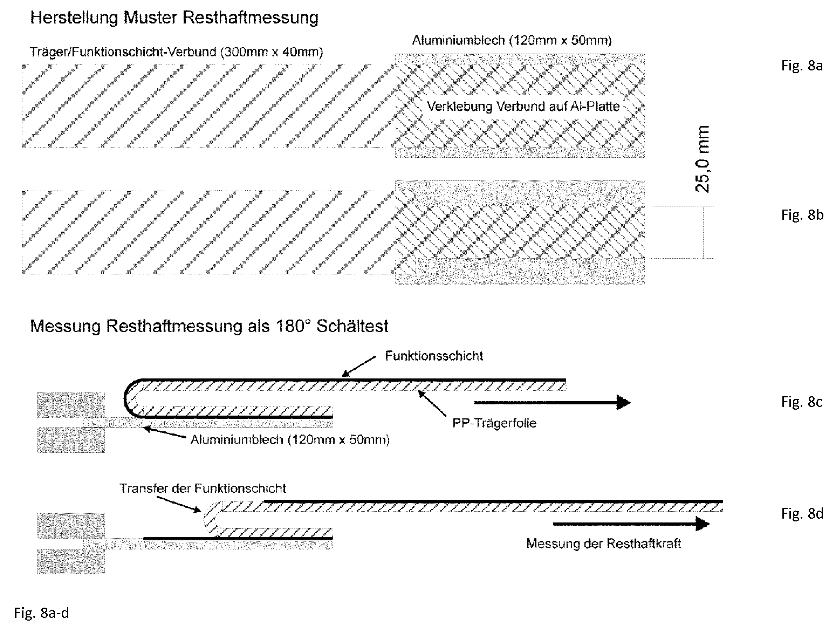

Die hergestellten Verbünde wurden zusätzlich nach 24h funktionsschichtseitig mit einer Stirnseite bündig mit einem Aluminiumblech der Größe 120mm x 50mm verklebt (Klebstoff Araldit 2010 (schematisch: Fig. 8a)). Nach der Klebstoffaushärtung wurde der erfindungsgemäße Verbund derart eingeschnitten, dass der Verbund auf dem Blech eine Breite von 25mm aufweist (schematisch: Fig. 8b). Anschließend wurde das lose Ende des Verbundes und das Ende des Aluminiumblechs in eine Zugmaschine eingespannt (schematisch: Fig. 8c). In Anlehnung an die Norm DIN EN 1939:2003 wurde ein 180°-Schälabzugstest durchgeführt um die zur Ablösung notwendige Schälkraft, d.h. die Resthaftkräfte zwischen polymeren Träger und Kratzschutzschicht quantitativ zu bestimmen (schematisch: Fig. 8d)). Die Abzugsgeschwindigkeit betrug hierbei 0,5mm/s und die Abzugslänge 50mm (inklusive 25mm Vorlaufstrecke). Die ermittelten Schälkräfte wurden auf eine Abzugsbreite von 10mm normiert.

Tabelle 6 zeigt die nach dem Schältest ermittelten Schälkräfte zwischen polymeren Träger und Kratzschutzschicht. Eine Trennung erscheint für diesen Verbund möglich für Schälkräfte bis zu 7N/cm, wobei in diesem Fall bereits eine deutliche Schädigung bis zur plastischen Verformung der PP-Folie stattfindet, die Haftung für den sinnvollen Gebrauch zu hoch ist und eine Schädigung der transferierten Funktionsschicht nicht ausgeschlossen werden kann. Die Trennung erfolgt hier weitgehend durch einen Kohäsionsbruch in der Kratzschutzschicht. Dies ist nicht erfindungsgemäß. Eine saubere Trennung mittels Kohäsionsbruch im polymeren Träger erscheint bis zu Schälkräften bis zu 5N/cm möglich. Die BIAS-Variation zeigt, dass insbesondere die BIAS-Spannung ein sehr guter Regelparameter ist, um die Haftungskräfte durch den Fachmann gezielt einzustellen. Mittels der Variation ist es unter den genannten Prozessparametern möglich, die Schälkräfte in einem Bereich von 0,07 bis 4,7N/cm gezielt einzustellen. Diese Möglichkeit liefert insbesondere einen guten Zugang für den Fachmann, den gemessenen Schichteigenspannungen der Funktionsschicht gezielt entgegenzuwirken.

**Tab. 6: Schälkräfte zwischen Träger und Kratzschutzschicht nach 180°-Schältest - PP Folie**

| **Material** | **BIAS [V]** | **Verbundstabilität nach 48h** | **Schälkraft [N/cm]** | **Schichttransfer (Übertrag)** |
|---|---|---|---|---|
| PP- Referenz | | IO | 7,3 ± 0,5 | NIO/IO (teilweise Funktionsschicht- und Trägerschädigung) |
| | 50 | IO | 4,7 ± 0,8 | IO (100%) |
| PP | 75 | IO | 1,7 ± 0,6 | IO (100%) |
| | 100 | IO | 0,57 ± 0,05 | IO (100%) |
| | 150 | IO | 0,15 ± 0,04 | IO (100%) |
| | 200 | IO | 0,07 ± 0,03 | IO (100%) |

### Beispiel 4

Aktivierung einer 100µm dicken PP-Folie mittels eines Niederdruckplasmaprozesses in einem 0,3qm Reaktor (BIAS-gesteuerter Prozess). Die Folien wurden auf eine Elektrode mit Vorspannung (BIAS) positioniert und 120s lang aktiviert. Als Arbeitsgas wurde ein Wasserstoff/Sauerstoffgemisch im Verhältnis 2 zu 1 verwendet. Die BIAS-Vorspannung betrug 100V. Auf die derart aktivierte Polymeroberfläche wurde im Anschluss als Funktionsbeschichtung eine plasmapolymere Kratzschutzschicht aufgetragen (Parameter identisch zu Beispiel 1, Zeitdauer des Teilschritts 2: 1000s). Die Schichtdicke der Kratzschutzbeschichtung betrug ca. 2µm, die Durchbiegung aufgrund der internen Spannungen betrug ca. 150µm, gemessen auf einem Glasträger (Dicke 150µm) entlang einer Strecke von 50mm.

Die so angefertigten Verbünde wurden in die Kavität eines Spritzgusswerkzeuges positioniert und anschließend kratzschutzseitig mit PMMA bzw. PC hinterspritzt. Die mikroskopische Untersuchung nach Abzug der Trägerfolie ergab, dass die Kratzschutzbeschichtung auf den Spritzling übertragen wurde.

### Beispiel 5:

Aktivierung einer 75µm dicken PET-Folie (Mylar A75) mittels eines Niederdruckplasmaprozesses in einem 0,3qm Reaktor bei einer vorgegebenen BIAS-Spannung von 100V (BIAS-gesteuerter Prozess mit einer eingekoppelten Leistung ca. 60-70W). Die Folien wurden auf eine Elektrode mit Vorspannung (BIAS) positioniert und 30s lang aktiviert. Als Arbeitsgas wurden Wasserstoff/Sauerstoffmischungen im Verhältnis 3:2 verwendet. Auf die derart aktivierte Polymeroberfläche wurde im Anschluss als Funktionsbeschichtung eine plasmapolymere Kratzschutzschicht aufgetragen (Parameter identisch zu Beispiel 1, außer Zeitdauer des Teilschritts 2: 1800s). Die Durchbiegung aufgrund der internen Spannungen betrug ca. 200-250µm, gemessen auf einem Glasträger (Dicke 150µm) entlang einer Strecke von 50mm. Die Schichtstabilität wurde nach 48h nach der Herstellung optisch als stabil bewertet.

Die hergestellten Verbünde wurden zusätzlich nach 24h funktionsschichtseitig mit einer Stirnseite bündig mit einem Aluminiumblech der Größe 120mm x 50mm verklebt (Klebstoff Araldit 2010 (schematisch: Fig. 8a)). Nach der Klebstoffaushärtung wurde der erfindungsgemäße Verbund derart eingeschnitten, dass der Verbund auf dem Blech eine Breite von 25mm aufweist(schematisch: Fig. 8b). Anschließend wurde das lose Ende des Verbundes und das Ende des Aluminiumblechs in eine Zugmaschine eingespannt(schematisch: Fig. 8c). In Anlehnung an die Norm DIN EN 1939:2003 wurde ein 180°-Schälabzugstest durchgeführt um die Haftkräfte, die Resthaftkräfte zwischen polymeren Träger und Kratzschutzschicht quantitativ zu bestimmen (schematisch: Fig. 8d)). Die Abzugsgeschwindigkeit betrug hierbei 0,5mm/s und die ausgewertete Abzugslänge 25mm. Die Haftkräfte wurden auf eine Abzugsbreite von 10mm normiert.

Die Abzugskraft betrug hierbei 2-3N/cm. Eine Wiederholung des Versuchs nach einer Lagerdauer von 3 Monaten ergab eine reduzierte Abzugskraft von 0,6N/cm. Es zeigt sich, dass die Aktivierungsintensität für die verwendete PET-Folie wesentlich geringer sein muss im Vergleich zu PP oder PC. Die Steuerung kann beispielsweise über die Zeitdauer oder die ins Plasma eingekoppelte Leistung erfolgen.

### Beispiel 6:

Entsprechend des Beispiels 5 wurde ein zweites PET Folienmuster lediglich mit der plasmapolymeren Kratzschutzschicht versehen und verarbeitet. Der Verbund blieb ebenfalls 48h lang ohne Schichtablösung stabil. Die Abzugskraft betrug hierbei ca. 0,1-0,5N/cm. Dieses zweite Muster verifiziert die Überlegung einer kurzen Aktivierungsphase, die bei diesem Beispiel während des Einsetzens des Plasmas erfolgt und im Falle von PET ausreichen kann.

## Patentansprüche

1. Träger-Funktionsschichtanordnung, umfassend einen Träger aus polymerem Material und eine unmittelbar auf dem Träger angeordnete Funktionsschicht, wobei die zur Funktionsschicht ausgerichtete Seite des Trägers einem Aktivierungsverfahren unterworfen wurde, das gleichzeitig eine Strukturschwächung des Trägers an dieser Seite bewirkt, wobei das Aktivierungsverfahren so durchgeführt wurde, dass (i) die Ebene mit der geringsten Festigkeit innerhalb der TrägerFunktionsschichtanordnung innerhalb des Trägermaterials liegt und (ii) die bei Trennung der Funktionsschicht vom Träger zu überwindende Schälkraft 0,1 - 10N/cm, vorzugsweise 0,4 - 10N/cm beträgt.

2. Träger-Funktionsschichtanordnung nach Anspruch 1, wobei nach der Trennung der Funktionsschicht vom Träger Schichtbereiche von Trägermaterial einer Stärke von 1 - 1000 nm auf der Funktionsschicht verbleiben.

3. Träger-Funktionsschichtanordnung nach Anspruch 1 oder 2, wobei das Aktivierungsverfahren ausgewählt ist aus der Gruppe bestehend aus Behandlung mit reaktivem, nicht-schichtbildendem Gas, Elektronenbeschuss, UV-Bestrahlung, VUV-Bestrahlung, lonenbeschuss oder einer Kombination von zwei oder mehr dieser Verfahren.

4. Träger-Funktionsschichtanordnung nach einem der vorangehenden Ansprüche, wobei das Aktivierungsverfahren eine Plasmabehandlung ohne schichtbildende Gase (i) mit oder (ii) ohne lonenbeschuss ist.

5. Träger-Funktionsschichtanordnung nach Anspruch 4, wobei die in der Plasmabehandlung eingesetzten Gase Inertgase sind oder keine zur Kettenbildung befähigten Atome enthalten, bevorzugt Sauerstoff, Wasserstoff, Stickstoff, Edelgase, NH₃, N₂O H₂O oder deren Gemische sind.

6. Träger-Funktionsschichtanordnung nach einem der vorangehenden Ansprüche, wobei das polymere Material des Trägers ausgewählt ist aus der Gruppe der Thermoplaste, bevorzugt PP, PVC, PET, PE, PUR, PA und/oder die Funktionsschicht ausgewählt ist aus der Gruppe bestehend aus Lack, plasmapolymere Beschichtung, Sol-Gel Beschichtung, Metallisierungsschicht, Keramikschicht, Farbe insbesondere plasmapolymere Kratzschutzbeschichtung.

7. Träger-Funktionsschichtanordnung nach einem der vorangehenden Ansprüche, wobei der Träger eine Folie ist und/oder die Funktionsschicht flexibel ausgestaltet ist.

8. Verfahren zum Herstellen einer Träger-Funktionsschichtanordnung nach einem der vorangehenden Ansprüche, umfassend die Schritte:
a) Bereitstellen eines Trägers,
b) Aktivieren der durch eine Funktionsschicht zu beschichtenden Oberfläche des Trägers mittels eines Aktivierungsverfahrens und
c) Beschichten des Trägers nach Schritt b) mit einer Funktionsschicht,
wobei der Schritt b) so ausgeführt wird, dass (i) die Ebene mit der geringsten Festigkeit innerhalb der Träger-Funktionsschichtanordnung innerhalb des Trägermaterials liegt und (ii) die bei Trennung der Funktionsschicht vom Träger zu überwindende Schälkraft 0,1 - 10N/cm, vorzugsweise 0,4 - 10N/cm beträgt.

9. Verfahren nach Anspruch 8, wobei das Aktivierungsverfahren in Schritt b) ausgewählt ist aus der Gruppe bestehend aus Behandlung mit reaktivem, nichtschichtbildendem Gas, Elektronenbeschuss, UV-Bestrahlung, VUV-Bestrahlung, lonenbeschuss oder einer Kombination von zwei oder mehr dieser Verfahren.

10. Verfahren nach Anspruch 9, wobei das Aktivierungsverfahren in Schritt b) eine Plasmabehandlung ohne schichtbildende Gase (i) mit oder (ii) ohne Ionenbeschuss ist.

11. Verwendung einer Träger-Funktionsschichtanordnung nach einem der Ansprüche 1 bis 7 in einem Spritzgussverfahren, Gießverfahren, Klebeverfahren, Laminierverfahren, Lackierverfahren, Vulkanisationsverfahren.

12. Verfahren zu Herstellung eines Bauteiles mit einer Funktionsschicht, umfassend die Schritte:
a) Bereitstellen einer Träger-Funktionsschichtanordnung nach einem der Ansprüche 1 bis 7,
b) Beschichten der Funktionsschicht mit Bauteilmaterial und
c) Abziehen des Trägers von der Funktionsschicht.

## Claims

1. A support/functional layer assembly comprising a support made of polymeric material and a functional layer arranged directly on said support, wherein the side of the support facing the functional layer has been subjected to an activation process which simultaneously causes a structural weakening of the support on this side, the activation process having being carried out in such a way that (i) the plane with the lowest strength within the support/functional layer assembly lies within the support material and (ii) the peel force to be overcome when separating the functional layer from the support is 0.1 - 10 N/cm, preferably 0.4 - 10 N/cm.

2. The support/functional layer assembly according to claim 1, wherein after separation of the functional layer from the support, layer areas of support material with a thickness of 1 - 1000 nm remain on the functional layer.

3. The support/functional layer assembly according to claim 1 or 2, wherein the activation process is selected from the group consisting of treatment with reactive, non-film-forming gas, electron bombardment, UV irradiation, VUV irradiation, ion bombardment or a combination of two or more of these processes.

4. The support/functional layer assembly according to one of the preceding claims, wherein the activation process is a plasma treatment without film-forming gases (i) with or (ii) without ion bombardment.

5. The support/functional layer assembly according to claim 4, wherein the gases employed in the plasma treatment are inert gases or contain no atoms capable of forming chains, preferably oxygen, hydrogen, nitrogen, noble gases, NH₃, N₂O, H₂O or mixtures thereof.

6. The support/functional layer assembly according to one of the preceding claims, wherein the polymeric material of the support is selected from the group of the thermoplastics, preferably PP, PVC, PET, PE, PUR, PA, and/or the functional layer is selected from the group consisting of lacquer, plasma polymer coating, sol-gel coating, metallising layer, ceramic layer, paint, in particular plasma polymer anti-scratch coating.

7. The support/functional layer assembly according to one of the preceding claims, wherein the support is a film and/or the functional layer is of flexible configuration.

8. A process for the production of a support/functional layer assembly according to one of the preceding claims, comprising the following steps:
a) providing a support,
b) activating the surface of the support to be coated with a functional layer by means of an activation process and
c) coating the support according to step b) with a functional layer,
wherein step b) is carried out in such a way that (i) the plane with the lowest strength within the support/functional layer assembly lies within the support material and (ii) the peel force to be overcome when separating the functional layer from the support is 0.1 - 10 N/cm, preferably 0.4 - 10 N/cm.

9. The process according to claim 8, wherein the activation process in step b) is selected from the group consisting of treatment with reactive, non-film-forming gas, electron bombardment, UV irradiation, VUV irradiation, ion bombardment or a combination of two or more of these processes.

10. The process according to claim 9, wherein the activation process in step b) is a plasma treatment without film-forming gases (i) with or (ii) without ion bombardment.

11. Use of a support/functional layer assembly according to one of claims 1 to 7 in an injection-moulding process, casting process, bonding process, laminating process, painting process, vulcanising process.

12. A process for the production of a component having a functional layer, comprising the following steps:
a) providing a support/functional layer assembly according to one of claims 1 to 7,
b) coating the functional layer with component material and
c) peeling the support from the functional layer.

## Revendications

1. Ensemble de support-couche fonctionnelle, comprenant un support composé d' un matériau polymère et une couche fonctionnelle disposée directement sur le support, dans lequel la face du support, orientée vers la couche fonctionnelle, est soumise à un procédé d'activation, lequel entraîne dans le même temps un affaiblissement structurel du support au niveau de ladite face, dans lequel le procédé d'activation est effectué de telle sorte que (i) le niveau présentant la résistance la plus faible se trouve à l'intérieur de l'ensemble de support-couche fonctionnelle à l'intérieur du matériau de support et que (ii) la force de pelage à surmonter lors du retrait de la couche fonctionnelle du support présente une valeur de 0,1 - 10 N/cm, de préférence de 0,4 - 10 N/cm.

2. Ensemble de support-couche fonctionnelle selon la revendication 1, dans lequel des zones de couche du matériau de support présentant une épaisseur de 1 - 1 000 nm restent sur la couche fonctionnelle après le retrait de la couche fonctionnelle du support.

3. Ensemble de support-couche fonctionnelle selon la revendication 1 ou 2, dans lequel le procédé d'activation est choisi parmi le groupe constitué d'un traitement avec un gaz réactif ne formant pas de couche, d'un bombardement électronique, d'une exposition à un rayonnement UV, d'une exposition à un rayonnement VUV, d'un bombardement ionique ou d'une combinaison de deux desdits procédés ou plus.

4. Ensemble de support-couche fonctionnelle selon l'une quelconque des revendications précédentes, dans lequel le procédé d'activation est un traitement par plasma sans gaz formant de couche (i) avec ou (ii) sans bombardement ionique.

5. Ensemble de support-couche fonctionnelle selon la revendication 4, dans lequel les gaz utilisés dans le traitement par plasma sont des gaz inertes ou ne contenant aucun atome en mesure de former des chaînes, de préférence l'oxygène, l'hydrogène, l'azote, les gaz nobles, le NH₃, le N₂O, l'H₂O ou leurs mélanges.

6. Ensemble de support-couche fonctionnelle selon l'une quelconque des revendications précédentes, dans lequel le matériau polymère du support est choisi parmi le groupe des matières thermoplastiques, de préférence PP, PVC, PET, PE, PUR, PA, et/ou dans lequel la couche fonctionnelle est choisie parmi le groupe constitué d'un vernis, d'un revêtement polymère plasma, d'un revêtement sol-gel, d'une couche de métallisation, d'une couche de céramique, d'un colorant, en particulier d'un revêtement anti-rayures polymère plasma.

7. Ensemble de support-couche fonctionnelle selon l'une quelconque des revendications précédentes, dans lequel le support est un film et/ou que la couche fonctionnelle est configurée de manière flexible.

8. Procédé servant à fabriquer un ensemble de support-couche fonctionnelle selon l'une quelconque des revendications précédentes, comprenant les étapes suivantes consistant à :
a) fournir un support ;
b) activer la surface, à revêtir par une couche fonctionnelle, du support au moyen d'un procédé d'activation ; et
c) revêtir le support selon l'étape b) d'une couche fonctionnelle,
dans lequel l'étape b) est exécutée de telle sorte que (i) le niveau présentant la résistance la plus faible se trouve à l'intérieur de l'ensemble de support-couche fonctionnelle à l'intérieur du matériau de support et que (ii) la force de pelage à surmonter lors du retrait de la couche fonctionnelle du support présente une valeur de 0,1 - 10 N/cm, de préférence de 0,4 - 10 N/cm.

9. Procédé selon la revendication 8, dans lequel le procédé d'activation lors de l'étape b) est choisi parmi le groupe constitué d'un traitement avec un gaz réactif, ne formant pas de couche, d'un bombardement électronique, d'une exposition à un rayonnement UV, d'une exposition à un rayonnement VUV, d'un bombardement ionique ou d'une combinaison de deux desdits procédés ou plus.

10. Procédé selon la revendication 9, dans lequel le procédé d'activation lors de l'étape b) est un traitement par plasma sans gaz formant une couche (i) avec ou (ii) sans bombardement ionique.

11. Utilisation d'un ensemble de support-couche fonctionnelle selon l'une quelconque des revendications 1 à 7, lors d'un procédé de moulage par injection, d'un procédé de coulée, d'un procédé de collage, d'un procédé de laminage, d'un procédé de mise en peinture, d'un procédé de vulcanisation.

12. Procédé servant à fabriquer un composant comprenant une couche fonctionnelle, comprenant les étapes suivantes consistant à :
a) fournir un ensemble de support-couche fonctionnelle selon l'une quelconque des revendications 1 à 7 ;
b) revêtir la couche fonctionnelle d'un matériau de composant ; et
c) enlever le support de la couche fonctionnelle.
